# EUROPEAN PATENT SPECIFICATION

(11) **EP 3 173 383 B1**
(45) Date of publication and mention of the grant of the patent: **03.06.2020**
(21) Application number: 15825584.4
(22) Date of filing: 22.07.2015
(51) Int. Cl.: C02F 1/56, B01D 21/01, C02F 1/52, C02F 1/66, C02F 103/14, C02F 101/30

(54) **TREATMENT METHOD FOR CIRCULATING WATER OF WET TYPE COATING BOOTH**
BEHANDLUNGSVERFAHREN ZUR WASSERZIRKULATION VON NASSBESCHICHTUNGSKABINEN
PROCÉDÉ DE TRAITEMENT POUR DE L'EAU EN CIRCULATION DE CABINE DE REVÊTEMENT DE TYPE HUMIDE

(30) Priority: 23.07.2014 JP 2014149506; 30.01.2015 JP 2015017142
(43) Date of publication of application: 31.05.2017
(73) Proprietor: Kurita Water Industries Ltd., Tokyo 164-0001 (JP)
(72) Inventor: YOSHIDA, Tsuneyuki, Tokyo 164-0001 (JP); HORIUCHI, Masahiro, Tokyo 164-0001 (JP); YOSHIKAWA, Tsutomu, Tokyo 164-0001 (JP); ARIMOTO, Yuta, Tokyo 164-0001 (JP)
(74) Representative: Hoffmann Eitle
(86) International application number: PCT/JP2015/070856
(87) International publication number: WO 2016/013586

(56) References cited:
- WO-A1-2005/077835
- JP-A- H 054 088
- JP-A- H05 146 786
- JP-A- H09 243 588
- JP-A- 2005 103 361
- JP-A- 2005 152 865
- JP-A- 2005 238 085
- JP-A- 2006 231 265
- JP-A- 2008 173 562
- JP-A- 2009 022 852
- JP-A- 2011 194 306
- JP-A- 2012 187 482
- JP-A- 2013 132 601

## Description

### Field of Invention

The present invention relates to a method for treating circulating water circulating through a wet paint booth which enable an efficient coagulation treatment of a paint included in the circulating water by appropriately controlling a pH of the circulating water.

### Background of Invention

Spray painting is performed in a process of painting automobiles, electrical apparatuses, metal products. Spray painting produces a large amount of overspray paint (excess paint), which is not deposited on the material that is to be painted. An amount of the excess paint produced in such a painting process is about 50% to 60% of the amount of the paint used, excluding the case where electrostatic painting, which offers a high painting efficiency, is employed. Accordingly, it is necessary to remove and recover excess paint from the painting process. Wet paint booths, in which water is used for cleaning, are commonly employed for collecting excess paint. The cleaning water is circulated and reused. In such a painting booth, excess paint included in the circulating water is coagulated and separated in order to prevent the accumulation of paint that remains in the circulating water.

The following methods have been proposed as a method for coagulating excess paint included in water circulating through a wet paint booth.
(1) A method in which a phenolic resin and a cationic polymer are added to water circulating through a wet paint booth in specific proportions (Patent Literature 1)
(2) A method in which a treatment agent that includes a phenolic resin, an inorganic polyvalent metal salt, a watersoluble polymer coagulant, an inorganic alkali, and water is added to water circulating through a wet paint booth (Patent Literature 2)
(3) A method in which a phenolic resin, aluminum sulfate, ettringite, and the like are added to water circulating through a wet paint booth (Patent Literature 3)

In Patent Literature 1, it is described that the pH of a coagulation treatment system is preferably set to about 6.0 to 8.5 in consideration of the corrosion of the facility and the advantageous effects of the cationic polymer which vary with pH. In Examples of Patent Literature 1, the pH value is adjusted to 6.7 to 6.8. However, the advantageous effects of limiting the pH range have not been clarified in Patent Literature 1. In Patent Literature 1, pH-adjusting agents such as HCl and NaOH are used for adjusting pH in addition to the phenolic resin and the cationic polymer. However, as described in Comparative examples below, it is not possible to coagulate a paint constituent to a sufficient degree by using an alkaline solution of a phenolic resin and a cationic polymer.

The treatment agent described in Patent Literature 2 is prepared by mixing together a phenolic resin, an inorganic polyvalent metal salt, and the like. A treatment agent used in Examples of Patent Literature 2 is a mixture of an alkaline solution of a phenolic resin, which is prepared by dissolving a phenolic resin in an alkali, with sodium aluminate and the like. In Patent Literature 2, it is described that the pH of the treatment agent is alkaline. In Patent Literature 2, it is described that the pH of the treatment water is preferably adjusted to be neutral, that is, specifically, 5.5 to 8.5, in consideration of wastewater treatment. In Examples of Patent Literature 2, dilute sulfuric acid is added to the treatment water in addition to the above treatment agents for adjusting the pH of the treatment water to 7. However, also in Patent Literature 2, the advantageous effects of limiting the pH range are not clarified. Furthermore, in Patent Literature 2, the phenolic resin and the inorganic polyvalent metal salt are not used separately. Moreover, in Patent Literature 2, there are no technical ideas that using an alkaline solution of a phenolic resin, which is alkaline, and an inorganic polyvalent metal salt, which is acidic, may eliminate the need to use a pH-adjusting agent.

In Patent Literature 3, there is no description of the pH of the water circulation system, and the relationship between the pH conditions and their advantageous effects has not been studied.

JP 2009 022852 A and JP 2011 194306 A describe methods for treating wet paint booth circulating water with an alkaline phenolic resin and an acidic aluminum salt. WO 2005/077835 A1 describes a method for treating industrial wastewater including dyes, in which an acidic coagulant can be used to adjust the pH to 6-9.

Paints used in a painting process are broadly divided into solvent-based paints that include only an organic solvent, such as a thinner, as a solvent and water-based paints that include water as a solvent. Solvent-based paints have higher weather resistance and chipping resistance than water-based paints and have been widely used particularly for automotive top clear coating. Water-based paints, which include water used as a solvent (although some of them further include a solvent other than water), are advantageous in that they are non-flammable, safe, and sanitary and, for example, have no risk of causing pollution due to organic solvents. Therefore, the number of fields in which the water-based paints are used has been increasing. Solvent-based paints and water-based paints have the following issues.

Solvent-based paints: The particles of excess paint mixed in the circulating water have high adhesion. The particles are likely to adhere to and severely contaminate the facilities. The particles of excess paint may also coagulate with one another to form large flocs, which cause clogging.

Water-based paints: Since water-based paints are intrinsically soluble in water or capable of uniformly dispersing in water, the paint constituent accumulates and concentrates in water circulating the booth in proportion to the amount of the paint used. The concentration of the paint constituent results in the concentration of foamable substances, such as a surfactant, included in the paint, which results in the generation of bubbles. Furthermore, increases in the concentration of suspended substances in the circulating water and the viscosity of the circulating water stabilize the bubbles and cause intensive foaming. This may result in failure to operate the paint booth with consistency.

Because of the above-described facts, it is desirable in a coagulation treatment of water circulating through a wet paint booth to markedly reduce both the adhesion of solvent-based paints and the foaming ability of water-based paints.

Regardless of the type of paint that is to be coagulated, the pH of the circulating water plays an important role to maximize the effect of the coagulant used.

For adjusting the pH of water circulating in a wet paint booth, sulfuric acid and caustic soda have been commonly used as an acid and an alkali, respectively, since they are not expensive.

As described above, Patent Literatures 1 to 3 propose a method in which an alkaline solution of a phenolic resin or an acidic aluminum salt is added to water circulating through a wet paint booth in order to perform coagulation. In Patent Literatures 1 and 2, a pH-adjusting agent such as sulfuric acid, hydrochloric acid, or caustic soda needs to be further used. In Patent Literature 3, the pH conditions are not taken into consideration.

In a method described in Patent Literature 4, an acidic or neutral, main treatment agent and an alkaline pH-adjusting agent are added to water circulating through a paint booth while the ratio between the amounts of main treatment agent and pH-adjusting agent is maintained to fall within a predetermined range. The addition of the pH-adjusting agent is controlled such that the pH-adjusting agent is added to the circulating water when the pH of the circulating water is equal to or less than a predetermined value and the addition of the pH-adjusting agent is paused when the pH of the circulating water exceeds the predetermined value. In Patent Literature 4, the occurrence of an anomaly is displayed when the amount of time during which the pH-adjusting agent is continuously added to the circulating water exceeds a predetermined value in order to notify of the accuracy of the pH-meter being reduced due to the adhesion of paint sludge and salts to the pH-meter. However, the method described in Patent Literature 4 is not a method that limits a reduction in the accuracy of the pH-meter due to the contamination of the pH-meter.

Patent Literature 1: Japanese Patent 4069799
Patent Literature 2: JP 2005-103361 A
Patent Literature 3: JP 2012-187482 A
Patent Literature 4: JP 11-57599 A

The method described in Patent Literature 1, in which a phenolic resin and a cationic polymer are used in combination, is not capable of achieving a sufficient coagulation effect.

Although the combined use of a phenolic resin and an acidic aluminum salt such as aluminum sulfate is suggested in Patent Literatures 2 and 3, the relationship between the pH in the treatment and the advantageous effects is not studied. Thus, it is not considered that the methods described in Patent Literatures 2 and 3 are capable of achieving an excellent coagulation effect with certainty.

The method described in Patent Literature 2 requires using a phenolic resin in combination with an inorganic polyvalent metal salt such as aluminum sulfate in the form of a single agent. That is, the phenolic resin and the inorganic polyvalent metal salt are not used separately.

In Patent Literature 3, there is no description of the pH in the treatment. In Patent Literatures 1 and 2, in which mention is made of pH conditions, a pH-adjusting agent is further used for adjusting pH.

In a coagulation treatment of water circulating through a wet paint booth, every coagulant has its optimum pH range in which the coagulation effect of the coagulant is maximized.

In actual use, the pH of the circulating water needs to be controlled to be the optimum pH as needed, because it fluctuates due to various factors such as a paint, a thinner, a detergent, and their degradation products. A method in which a pH-adjusting agent is additionally used as in Patent Literatures 1 and 2 increases the number of types of chemicals required and results in the use of deleterious substances such as sulfuric acid and NaOH. Thus, this method is disadvantageous in terms of cost and workability.

In the case where an alkaline solution of a phenolic resin and an acidic aluminum salt are used in combination for coagulating water circulating through a wet paint booth, the amounts of these agents are each set to be an amount required to, for example, reduce the adhesion of a paint, coagulate the paint, reduce the occurrence of foaming by desorbing a bubble constituent, and float the sludge. In the coagulation treatment of water that circulates in a wet paint booth, adjusting pH to be about 7 maximizes the coagulation effects. Accordingly, the pH of the circulating water has been adjusted manually or automatically by using an acid and an alkali in addition to these agents in order to increase the effectiveness of the agents. For adjusting pH, sulfuric acid and caustic soda have been commonly used since they are not expensive. However, acids and alkalis are hazardous. Using such an acid and alkali in addition to the coagulants, that is, an alkaline solution of a phenolic resin and an acidic aluminum salt, increases the number of types of chemicals used for treating the circulating water and makes the management of chemicals and the chemical feed control more complex.

For adjusting pH, commonly, an acid or an alkali is added to the circulating water in accordance with the pH value measured with a pH-meter disposed in a circulating water pit. It has been difficult in a system of water circulating through a wet paint booth to maintain the pH of the circulating water to fall within a desired, specific range by automatic control for the following reasons.
(1) Paint and paint sludge contaminate a sensor included in a pH-meter disposed in a circulating water pit, which reduces the measurement accuracy.
(2) The addition of an acid or an alkali to the pit does not immediately affect the pH value measured with a pH-meter, because the pit through which the water is circulated has a large capacity. Furthermore, an acidic or alkaline constituent that gradually elutes from sludge deposited inside the pit is likely to cause error in the measurement with the pH-meter. Thus, the pH change due to the addition of an acid or an alkali is reflected in the pH value measured with the pH-meter with a large time lag.

### Summary of Invention

An object of the present invention is to provide a method for treating water circulating through a wet paint booth that enable an efficient coagulation treatment of a paint included in water circulating through a wet paint booth by adequately adjusting the pH of the circulating water.

Another object of the present invention is to provide a method for treating water circulating through a wet paint booth that do not require the use of a pH-adjusting agent and reduce the number of the types of the chemicals used and the amounts of chemicals used while adjusting the pH of the circulating water to meet optimum pH conditions in order to achieve a high coagulation effect.

The inventors of the present invention found that an adequate pH control can be achieved in an industrially advantageous manner by using, for adjusting pH, an alkaline solution of a phenolic resin, which is alkaline, as a coagulant also serving as an alkaline agent and an acidic aluminum salt, which is acidic, as a coagulant also serving as an acidic agent.

The inventors of the present invention found that adding an alkaline solution of a phenolic resin and an acidic aluminum salt not in a mixture but separately, the alkaline solution of a phenolic resin, which is alkaline, being used as a coagulant also serving as an alkaline agent, the acidic aluminum salt, which is acidic, being used as a coagulant also serving as an acidic agent, and adjusting the pH of the circulating water to be 6.5 to 8.0 by adjusting the amount of each coagulant within a specific range in which the coagulant produces the coagulation effect in response to the fluctuations in the pH of the circulating water enable the pH of the circulating water to be adjusted to be an optimum pH without using a pH-adjusting agent and achieve a high coagulation effect.

The technical idea of using an alkaline solution of a phenolic resin and an acidic aluminum salt as an agent for adjusting the pH of the circulating water has not been present in the methods proposed in the related art.

The inventors of the present invention also found that measuring the pH of the circulating water by using a measurement tank other than the circulating water pit in an intermittent manner and cleaning the pH-meter with clarified water in the periods during which the pH of the circulating water is not measured increase the accuracy of the pH-meter, which leads to an accurate pH control.

The summary of the present invention is as follows.
[1] A method for treating circulating water circulating through a wet paint booth and including a paint, the method comprising treating a paint included in the circulating water by separately adding an alkaline solution of a phenolic resin and an acidic aluminum salt to the circulating water for adjusting a pH of the circulating water to 6.5 to 8.0, wherein an amount of the alkaline solution of the phenolic resin added to the circulating water is increased when the pH of the circulating water is a predetermined value of 8.0 or less, wherein an amount of the acidic aluminum salt added to the circulating water is increased when the pH of the circulating water is a predetermined value of 6.5 or more and wherein any alkaline agent other than the alkaline solution of a phenolic resin is not used and any acidic agent other than the acidic aluminum salt is not used.
[2] A method for treating circulating water circulating through a wet paint booth and including a paint according to [1], the method comprising an amount of the alkaline solution of the phenolic resin added to the circulating water is increased when the pH of the circulating water is less than 6.8, and wherein an amount of the acidic aluminum salt added to the circulating water is increased when the pH of the circulating water is more than 7.2.
[3] The method for treating circulating water circulating through a wet paint booth according to [1] or [2], wherein the acidic aluminum salt is at least one selected from the group consisting of aluminum sulfate, aluminum chloride, polyaluminum chloride, basic aluminum chloride, and aluminum nitrate.
[4] The method for treating circulating water circulating through a wet paint booth according to any one of [1] to [3], wherein a cationic polymer is further added to the circulating water.
[5] The method for treating circulating water circulating through a wet paint booth according to any one of [1] to [4], wherein a polymer coagulant is further added to the circulating water in order to perform a coagulation treatment, after the alkaline solution of the phenolic resin; the alkaline solution of a phenolic resin and the acidic aluminum salt; or the alkaline solution of a phenolic resin, the acidic aluminum salt, and the cationic polymer is added to the circulating water.

### Advantageous Effects of Invention

The method for treating circulating water circulating through a wet paint booth according to the present invention enable an efficient coagulation treatment of a paint included in water circulating through a wet paint booth by adequately adjusting the pH of the circulating water.

In the method for treating circulating water circulating through a wet paint booth according to the present invention, an alkaline solution of a phenolic resin, which is alkaline, is used as a coagulant also serving as an alkaline agent, and an acidic aluminum salt, which is acidic, is used as a coagulant also serving as an acidic agent. The addition of the above coagulants is controlled in accordance with the fluctuations in the pH of the circulating water.

Since these coagulants are safe alkali and acid, the treatment effect is not degraded even when the amounts of the coagulants exceed their minimum requirements. According to the present invention, hazardous acids and alkalis that have been used for adjusting pH are not used and the above coagulants are used also for adjusting pH in addition to the amounts of the coagulants required for achieving their effects. This enables an adequate pH control in an industrially advantageous manner.

The method for treating circulating water circulating through a wet paint booth according to the present invention does not require the use of a pH-adjusting agent and reduces the number of the types of the chemicals used and the amounts of chemicals while adjusting the pH of the circulating water to meet the optimum pH conditions in order to achieve a high coagulation effect. This reduces the treatment cost and eliminates the need to use an acid and an alkali, which improves the workability.

The system for treating circulating water circulating through a wet paint booth measures the pH of the circulating water by using a measurement tank other than the circulating water pit in an intermittent manner and cleans the pH-meter with clarified water in the periods during which the pH of the circulating water is not measured. This increases the accuracy of the pH-meter. Setting a certain length of standby period between the intermittent pH-measurement periods reduces the time lag in the pH measurement and enables an adequate pH control.

### Brief Description of Drawings

Fig. 1 is a schematic system diagram illustrating an example of a system for treating water circulating through a wet paint booth according to an embodiment of the present invention.
Fig. 2 is a graph illustrating changes in the pH values of circulating water samples with time, which are measured in Example 1 and Comparative Example 1.
Fig. 3 is a schematic diagram illustrating a test system used in Examples.

### Description of Embodiments

Embodiments of the present invention are described below in detail.

### [Method for Treating Water Circulating Through Wet Paint Booth]

A method for treating circulating water circulating through a wet paint booth according to the present invention includes treating a paint included in the circulating water by adding an alkaline solution of a phenolic resin to the circulated water, and adjusting the pH of the circulating water to 6.5 to 8.0. The amount of the alkaline solution of a phenolic resin added to the circulating water is increased when the pH of the circulating water is a predetermined value of 8.0 or less. An acidic aluminum salt is further added to the water circulating through a wet paint booth. In such a case, the amount of the acidic aluminum salt added to the circulating water is increased when the pH of the circulating water is a predetermined value of 6.5 or more.

The method for treating circulating water circulating through a wet paint booth according to the present invention includes coagulating a water-based paint and/or a solvent-based paint included in the circulating water by adding an alkaline solution of a phenolic resin and an acidic aluminum salt to the circulating water. The alkaline solution of a phenolic resin and the acidic aluminum salt are separately added to the circulating water such that the pH of the circulating water is adjusted to 6.5 to 8.0.

### <Mechanism of Action>

Water-based paints are anionic. Reducing the pH of the circulating water results in a reduction in the anion degree of a water-based paint. This increases the likelihood of the coagulation of the water-based paint. Furthermore, the activity of an anionic surfactant is reduced, which limits the foaming of the water-based paint.

An alkaline solution of a phenolic resin is anionic. Charge neutralization increases the affinity of the alkaline solution of a phenolic resin for mainly hydrophobic (nonionic) substances, that is, nonionic surfactants and resins included in paints. The anion degree of an alkaline solution of a phenolic resin is also reduced under an acidic condition. This reduces the amount of cationic polymer required for charge neutralization.

The acidic aluminum salt is cationic in the neutral to acidic region. Thus, the acidic aluminum salt causes an anionic paint and hydrophilic emulsoids and SS particles (mainly anions) produced as a result of hydrolysis, oxidative degradation, or biodegradation of the paint to be coagulated by charge neutralization. The acidic aluminum salt is also responsible for the charge neutralization of the alkaline solution of a phenolic resin.

In the case where an alkaline solution of a phenolic resin is used for coagulation and, in particular, in the case where an alkaline solution of a phenolic resin and an acidic aluminum salt are used in combination for coagulation, the coagulation treatment is preferably performed in the neutral or acidic region. Since the alkaline solution of a phenolic resin is alkaline and the acidic aluminum salt is acidic, they can be used for adjusting pH.

In the present invention, an alkaline solution of a phenolic resin, which is alkaline, is used as a coagulant serving also as an alkaline agent. Moreover, an acidic aluminum salt, which is acidic, is used as a coagulant serving also as an acidic agent. The amounts of the above coagulants are each adjusted in response to the fluctuations in the pH of the circulating water so as to be within a specific range in which the coagulant produces its coagulation effect such that the pH of the circulating water is adjusted to 6.5 to 8.0 and preferably 6.8 to 7.2. This enables the pH of the circulating water to be adjusted to an optimum value without using a pH-adjusting agent.

When an alkaline solution of a phenolic resin is mixed with an acidic aluminum salt and the resulting mixture is used as a pH-adjusting agent, it is not possible to address fluctuations in the pH of the circulating water, and the use of an additional pH-adjusting agent is needed. Therefore, for adjusting pH, the alkaline solution of a phenolic resin and the acidic aluminum salt are not mixed together to be used in the form of a single agent but each separately added to water circulating through a wet paint booth.

In the present invention, an alkaline solution of a phenolic resin, which is alkaline, is used as a coagulant serving also as an alkaline agent, and an acidic aluminum salt, which is acidic, is used as a coagulant serving also as an acidic agent. The amounts of the above coagulants are each adjusted in response to the fluctuations in the pH of the circulating water so as to be within a specific range in which the coagulant produces its coagulation effect such that the pH of the circulating water is adjusted to 6.5 to 8.0 and preferably 6.8 to 7.2. This enables the pH of the circulating water to be adjusted to the optimum pH value without using a pH-adjusting agent.

A method for treating circulating water circulating through a wet paint booth according to the present invention is described where an alkaline solution of a phenolic resin and an acidic aluminum salt are used in combination, the alkaline solution of a phenolic resin serving as an alkaline agent, the acidic aluminum salt serving as an acidic agent, any alkaline agent other than the alkaline solution of a phenolic resin is not used, any acidic agent other than the acidic aluminum salt is not used, and the amounts of the above agents are controlled such that the pH of the circulating water is adjusted to 6.5 to 8.0.

Performing the treatment by using an alkaline solution of a phenolic resin as an alkaline agent but not any alkaline agent other than the alkaline solution of a phenolic resin and using an acidic aluminum salt as an acidic agent but not any acidic agent other than the acidic aluminum salt eliminates the need to use a pH-adjusting agent. This reduces the number of the types of the chemicals used, the amounts of chemicals used, and the amounts of time and effort required for chemical management and chemical feed control. Furthermore, the treatment cost can be reduced. In addition, it is not necessary to use hazardous chemicals such as acids and alkalis. This improves the workability. Thus, the above treatment method is markedly advantageous from an industrial viewpoint.

### <Alkaline Solution of Phenolic Resin>

The phenolic resin included in the alkaline solution of a phenolic resin is a condensate produced by the condensation of a phenol such as a monohydric phenol (e.g., phenol, cresol, or xylenol) with an aldehyde such as formaldehyde or a modified product of the condensate which has not yet been cured by crosslinking. Specific examples of such a phenolic resin include the following. The phenolic resin may be of a novolac type or a resole type. The following phenolic resins may be used alone or in combination of two or more.
1) Condensate of phenol and formaldehyde
2) Condensate of cresol and formaldehyde
3) Condensate of xylenol and formaldehyde
4) Alkyl-modified phenolic resin produced by the alkylation of the phenolic resin described in any one of 1) to 3)
5) Polyvinyl phenol

The alkali used for preparing the alkaline solution of a phenolic resin is commonly sodium hydroxide (NaOH) and/or potassium hydroxide (KOH). The concentration of the alkali in the alkaline solution of a phenolic resin is preferably 1% to 25% by weight. The concentration of the phenolic resin in the alkaline solution of a phenolic resin is preferably 1% to 50% by weight. For increasing the concentration of the phenolic resin in the alkaline solution of a phenolic resin, the alkaline solution may be heated to about 70°C to 80°C such that the phenolic resin is dissolved in the alkaline solution.

The alkaline solution of a phenolic resin commonly has a pH of about 10 to 13, that is, alkalinity.

### <Acidic Aluminum Salt>

Examples of the acidic aluminum salt include basic aluminum chloride, aluminum sulfate, aluminum chloride, polyaluminum chloride, and aluminum nitrate. The above acidic aluminum salts may be used alone or in combination of two or more.

### <Amounts of Chemicals Used>

The amounts of alkaline solution of a phenolic resin and acidic aluminum salt used are each adjusted so as to be within the range described below in response to the variation in the pH of water circulating through a wet paint booth.

The pH of water circulating through a wet paint booth is adjusted to 6.5 to 8.0 and preferably 6.8 to 7.2, which are the pH region in which the coagulation effects of the alkaline solution of a phenolic resin and the acidic aluminum salt are maximized. For adjusting the pH of the circulating water, it is preferable to control the amounts of the alkaline solution of a phenolic resin and the acidic aluminum salt without using, as pH-adjusting agents, an acidic agent such as an inorganic acid (e.g., sulfuric acid or hydrochloric acid) or an organic acid and an alkaline agent such as sodium hydroxide, potassium hydroxide, or ammonia.

Specifically, the amounts of the alkaline solution of a phenolic resin and the acidic aluminum salt which need to be used in the coagulation treatment are determined in advance. When the pH of the circulating water is changed and reaches a predetermined pH value of 8.0 or less, the amount of the alkaline solution of a phenolic resin, which is alkaline, is increased within the range described below so as to be larger than the predetermined amount in order to achieve a pH of 6.5 or more and preferably 6.8 or more. When the pH of the circulating water is changed and reaches a predetermined pH value of 6.5 or more, the amount of the acidic aluminum salt, which is acidic, is increased within the range described below so as to be larger than the predetermined amount in order to achieve a pH of 8.0 or less and preferably 7.2 or less. Adjusting the amounts of the alkaline solution of a phenolic resin and the acidic aluminum salt used in response to the variation in the pH of the circulating water in the above manner enables the pH of the circulating water to be adjusted to the optimum pH without using, as pH-adjusting agents, an acidic agent such as sulfuric acid and an alkaline agent such as sodium hydroxide in addition to the above coagulants.

When the pH of the circulating water is brought to fall within the above preferable range as a result of an increase in the amount of alkaline solution of a phenolic resin or the acidic aluminum salt used, the amount of the alkaline solution of a phenolic resin or the acidic aluminum salt used is reduced to the predetermined amount.

In order to adjust the pH of water circulating through a wet paint booth to 6.5 to 8.0 and preferably 6.8 to 7.2, the amount of alkaline solution of a phenolic resin used may be increased when the pH of the circulating water is less than 6.5 and preferably less than 6.8. In order to further reduce the variation in the pH of the circulating water, the amount of alkaline solution of a phenolic resin used may be increased when the pH of the circulating water is 6.8 or more and 8.0 or less.

For the same purpose, the amount of acidic aluminum salt used may be increased when the pH of the circulating water is more than 8.0 and preferably more than 7.2. In order to further reduce the variation in the pH of the circulating water, the amount of acidic aluminum salt used may be increased when the pH of the circulating water is 6.5 or more and 7.2 or less.

### <Amounts of Alkaline Solution of Phenolic Resin Used>

The amount of alkaline solution of a phenolic resin added to water circulating through a wet paint booth varies depending on the properties of the water circulating through a wet paint booth, the type of the paint included in the water circulating through a wet paint booth, and the content of the paint in the circulating water and is preferably 1 mg/L or more and particularly preferably 5 mg/L or more in terms of the content of active component (resin solid content) relative to the amount of the circulating water. The amount of the alkaline solution of a phenolic resin added to the circulating water is preferably 0.1% by weight or more and is particularly preferably 0.5% by weight or more of the amount (solid content) of the paint included in the circulating water in terms of the content of active component.

Setting the proportion of amount of alkaline solution of a phenolic resin added to the circulating water to be equal to or higher than the above proportion enables a sufficient coagulation effect, a sufficient adhesion-reduction effect, and a sufficient anti-foaming effect to be achieved.

Adding an excessive amount of alkaline solution of a phenolic resin to the circulating water does not increase the advantageous effects as appropriate to the amount of alkaline solution of a phenolic resin added to the circulating water but disadvantageously increases the costs of chemicals, the amount of coagulated sludge, and the like.

The amount of alkaline solution of a phenolic resin added to water circulating through a wet paint booth is preferably 1000 mg/L or less, more preferably 1 to 200 mg/L, and particularly preferably 5 to 200 mg/L in terms of the content of active components. The amount of alkaline solution of a phenolic resin added to the circulating water is preferably 100% by weight or less and particularly preferably 0.5% to 10% by weight of the amount of the paint included in the circulating water in terms of the amount of active components.

The amount of alkaline solution of a phenolic resin added to the circulating water may temporarily exceed the above upper limit when the amount of alkaline solution of a phenolic resin added to the circulating water is increased in order to control the pH of the circulating water.

### <Amount of Acidic Aluminum Salt Used>

The amount of acidic aluminum salt added to water circulating through a wet paint booth varies depending on the properties of the water circulating through a wet paint booth, the type of the alkaline solution of a phenolic resin added to the water circulating through a wet paint booth, the amount of alkaline solution of a phenolic resin added to the circulating water, and the presence of a cationic polymer used in combination and is preferably about 1 to 1000 mg/L, more preferably about 1 to 200 mg/L, and particularly preferably about 5 to 200 mg/L in terms of the content of active component relative to the amount of the circulating water. The amount of the acidic aluminum salt added to the circulating water is preferably about 0.1% to 100% by weight, is more preferably about 0.5% to 50% by weight, and is particularly preferably about 2.0% to 20% by weight of the amount of the paint included in the circulating water in terms of the content of active component.

Setting the amount of acidic aluminum salt added to the circulating water to be equal to or larger than the above lower limit enables a sufficient coagulation effect, a sufficient adhesion-reduction effect, and a sufficient anti-foaming effect to be achieved by the addition of the acidic aluminum salt. Adding the acidic aluminum salt to the circulating water in an amount exceeding the above upper limit does not increase the effect of the acidic aluminum salt as appropriate to the amount of acidic aluminum salt added to the circulating water but disadvantageously increases the costs of chemicals, the amount of coagulated sludge, and the like.

The amount of acidic aluminum salt added to the circulating water may temporarily exceed the above upper limit when the amount of acidic aluminum salt added to the circulating water is increased in order to adjust the pH of the circulating water.

### <Cationic Polymer>

In the present invention, a cationic polymer may be used in addition to an alkaline solution of a phenolic resin and an acidic aluminum salt. Using a cationic polymer in combination with an alkaline solution of a phenolic resin and an acidic aluminum salt enables a further suitable coagulation effect, a further suitable adhesion-reduction effect, and a further suitable anti-foaming effect to be achieved.

Examples of the cationic polymer include, but are not limited to, "organic coagulants" having a weight-average molecular weight of 1000 to 1 million and preferably 5000 to 300 thousand, such as dimethyldiallylammonium chloride, alkylamine-epichlorohydrin condensate, polyethyleneimine, alkylene dichloride-polyalkylene polyamine condensate, dicyandichloride-polyalkylene polyamine condensate, DMA (dimethylaminoethyl methacrylate), and DADMAC (diallyldimethylammonium chloride).

The above cationic polymers may be used alone or in a mixture of two or more.

In the case where a cationic polymer is used in combination with an alkaline solution of a phenolic resin and an acidic aluminum salt, the amount of cationic polymer added to the water circulating through a wet paint booth varies depending on the properties of the circulating water, the type and amount of the alkaline solution of a phenolic resin used, the amount of the acidic aluminum salt used, and the like and is preferably set to about 5 to 100 mg/L, more preferably about 5 to 50 mg/L, and particularly preferably about 10 to 30 mg/L relative to the amount of water circulating through a wet paint booth in terms of the amount of active components. The amount of cationic polymer added to the circulating water is preferably about 0.01% to 10% by weight, more preferably about 0.05% to 5% by weight, and particularly preferably about 0.5% to 2% by weight of the amount of paint included in the circulating water in terms of the amount of active components.

Setting the amount of cationic polymer added to the circulating water to be equal to or larger than the above lower limit increases the coagulation effect, the adhesion-reduction effect, and the anti-foaming effect of the addition of the cationic polymer to a sufficient level. Adding the cationic polymer to the circulating water in an amount exceeding the above upper limit does not increase the effect of the cationic polymer as appropriate to the amount of cationic polymer added to the circulating water. Adding an excessively large amount of cationic polymer to the circulating water causes particles to electrically repel one another due to the excess cations. This leads to an insufficient coagulation. Adding a large amount of cationic polymer to the circulating water also disadvantageously increases the costs of chemicals, the amount of coagulated sludge, and the like.

### <Coagulation Treatment by Addition of a Chemical>

A method for adding an alkaline solution of a phenolic resin, an acidic aluminum salt, and a cationic polymer, which may be optionally used as needed, to the circulating water circulating through a wet paint booth is not limited. The above agents may be added to the circulating water system about once or twice every day in an intermittent manner or in a continuous manner. The alkaline solution of a phenolic resin, the acidic aluminum salt, and the cationic polymer for coagulation treatment are each desirably fed to the circulating water continuously in a consistent amount with a pump. The addition of the alkaline solution of a phenolic resin and the acidic aluminum salt, which serve also as pH-adjusting agents, is preferably controlled in accordance with the pH of water circulating through a wet paint booth measured.

The position at which the alkaline solution of a phenolic resin, the acidic aluminum salt, and the cationic polymer are added to the circulating water is not limited; the above agents may be added to the circulating water at any position. In normal cases, an alkaline solution of a phenolic resin and an acidic aluminum salt that serve as coagulants are preferably added to piping that connects the circulating water pit to the wet paint booth, through which the circulating water passes. An alkaline solution of a phenolic resin and an acidic aluminum salt that serve as pH-adjusting agents are preferably added to the circulating water pit. Alternatively, the above pH-adjusting agents may also be added to the circulating water on the entry side of a separation tank to which the circulating water is returned.

The order of the addition of the phenolic resin, the acidic aluminum salt, and the cationic polymer optionally used as needed is not limited. The alkaline solution of a phenolic resin, the acidic aluminum salt, and the cationic polymer optionally used as needed may be added to the circulating water simultaneously at the same position or at different timings at different positions. In the case where the separation of coagulated sludge is performed with a floatation separation apparatus or a centrifugal separation apparatus, the cationic polymer may be added to the circulated water at a position upstream of the separation apparatus.

In the present invention, the alkaline solution of a phenolic resin and the acidic aluminum salt are not mixed together to form a single agent but separately used at least when being added to the circulating water for adjusting pH. The expression "the alkaline solution of a phenolic resin and the acidic aluminum salt are separately added" used herein means that these agents are not mixed together to form a single agent but separately added to the circulating water. The agents may be separately added to the circulating water at the same position at the same timing.

The cationic polymer may be added to the circulating water separately from the alkaline solution of a phenolic resin and the acidic aluminum salt. Alternatively, the cationic polymer may be mixed with the acidic aluminum salt, and the resulting mixture may be added to the circulating water.

Since the alkaline solution of a phenolic resin and the acidic aluminum salt serve also as pH-adjusting agents, the device that feeds the alkaline solution of a phenolic resin and the acidic aluminum salt is preferably capable of operating in cooperation with a pH-meter that measures the pH of water circulating through a wet paint booth. In such a case, the pH-meter may measure the pH of the circulating water at any position, such as in the circulating water pit or at the outlet of the circulation pump. The pH of the circulating water is preferably measured in a measurement tank other than the circulating water pit by using the system for treating water circulating through a wet paint booth according to the present invention, which is described below.

Upon the addition of the alkaline solution of a phenolic resin and the acidic aluminum salt or the addition of the alkaline solution of a phenolic resin, the acidic aluminum salt, and the cationic polymer, a paint included in the circulating water is quickly insolubilized and coagulate to form flocs. The flocs formed by coagulation are separated and recovered by, for example, flotation separation, wedge wire screening, rotary screening, bar screening, cyclone separation, or a method in which a centrifugal separating apparatus, a filtering apparatus, or the like is used.

The coagulated sludge separated and recovered by the above method is dewatered by gravity drainage or an ordinary method and subsequently disposed of by incineration and landfill. According to the present invention, an alkaline solution of a phenolic resin and an acidic aluminum salt are used also as pH-adjusting agents for adjusting the pH of the circulating water to an optimum pH value. This reduces the amount of chemicals required, the amount of sludge generated, and the cost of the disposal of the sludge.

In the coagulation treatment according to the present invention, subsequent to a coagulation treatment in which the alkaline solution of a phenolic resin and the acidic aluminum salt are added to the circulating water, or the alkaline solution of a phenolic resin, the acidic aluminum salt, and the cationic polymer are added to the circulating water, a polymer coagulant including a watersoluble polymer having a weight-average molecular weight of commonly more than one million and preferably five million or more may be further added to the circulating water in order to increase the size of the flocs.

Examples of the polymer coagulant include publicly known anionic polymer coagulants, cationic polymer coagulants, and zwitterionic polymer coagulants. The above polymer coagulants may be used alone or in combination of two or more.

In the case where a polymer coagulant is used, the amount of polymer coagulant added to the circulating water is determined appropriately so as to be 0.1% to 10% by weight and preferably 0.5% to 2% by weight of the amount of excess paint such that a suitable coagulation effect is achieved.

The method for treating water circulating through a wet paint booth according to the present invention may be used, with effect, for treating water circulating through a wet paint booth which includes a water-based paint, water circulating through a wet paint booth which includes a solvent-based paint, and water circulating through a wet paint booth which includes a water-based paint and a solvent-based paint.

The method for treating water circulating through a wet paint booth according to the present invention is preferably implemented with a system for treating water circulating through a wet paint booth according to the present invention, which is described below.

### [System for Treating Water Circulating Through Wet Paint Booth]

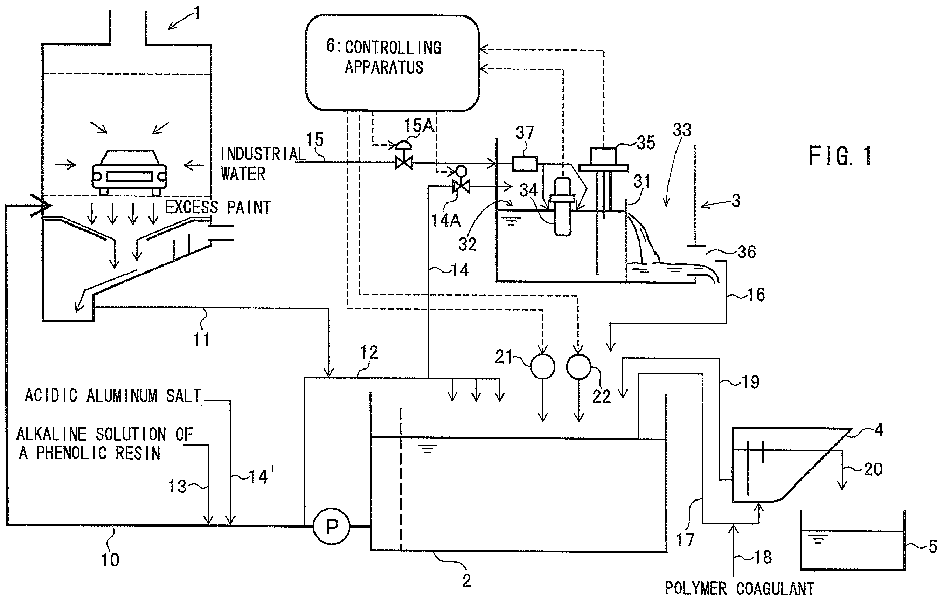

A system for treating water circulating through a wet paint booth is described below with reference to Fig. 1.

Fig. 1 is a schematic diagram illustrating an example of a system for treating water circulating through a wet paint booth, where Reference Numeral 1 denotes a wet paint booth, Reference Numeral 2 denotes a circulating water pit, Reference Numeral 3 denotes a measurement tank, Reference Numeral 4 denotes a sludge-recovering apparatus, Reference Numeral 5 denotes a recovered sludge-storage tank, and Reference Numeral 6 denotes a controlling apparatus. The controlling apparatus 6 is controlled by, for example, an ON-OFF control system or a PID control system, which are feedback control systems.

The circulating water contained in the circulating water pit 2 is drawn with a circulation pump P and fed to the wet paint booth 1 through piping 10. Circulation piping 12 is branched from the piping 10 in order to uniformly stir the circulating water contained in the circulating water pit 2. Part of the circulating water drawn with the circulation pump P is transported through the piping 12 and sprinkled over the surface of the circulating water contained in the circulating water pit 2. The piping 10 is provided with piping 13 and piping 14' that are connected thereto, through which the alkaline solution of a phenolic resin and the acidic aluminum salt, respectively, which serve as coagulants, are fed to the circulating water in predetermined amounts.

The circulating water circulating through a wet paint booth is fed to the wet paint booth 1 through the piping 10, collects excess paint in the wet paint booth 1, and is returned to the circulating water pit 2 through the piping 11 and the piping 12.

The circulating water pit 2 is provided with a device 21 for the addition of the alkaline solution of a phenolic resin and a device 22 for the addition of the acidic aluminum salt, which add the alkaline solution of a phenolic resin and the acidic aluminum salt, respectively, to the circulating water contained in the pit for adjusting pH. The above chemical-addition devices are each constituted by a chemical-storage tank, a chemical-feed pump, chemical-feed piping, and the like, which are not illustrated in the drawing. The controlling apparatus 6 controls the amounts of chemicals added to the circulating water. The control of the addition of the chemicals may be done by controlling the action of the chemical-feed pumps, switching the valves of the chemical-feed valves, or adjusting the degree of opening of the valves.

An overflow wall 31 partitions the measurement tank 3 into a retention section 32 and an overflow section 33. In the retention section 32, a pH-meter 34 and a water gauge (level switch) 35, which prevents a malfunction (measuring pH when the measurement tank 3 does not contain the circulating water) of the pH-meter 34, are disposed. The controlling apparatus 6 receives the pH value measured with the pH-meter 34 and the signal detected with the water gauge 35.

The overflow wall 31 has a V-shape notch portion formed in the vicinity of the center of the upper edge of the overflow wall 31. Water retained in the retention section 32 overflows through the notch portion, enters the overflow section 33, and discharges through an outlet 36 disposed on the overflow-section-33-side surface of the measurement tank 3. The discharged water is fed to the circulating water pit 2 through piping 16.

The retention section 32 of the measurement tank 3 receives, in addition to part of the circulating water fed through circulating water-feed piping 14 branched from the piping 12, clarified water, such as industrial water, fed through clarified water-feed piping 15. The feed piping 14 and the feed piping 15 are provided with on-off valves 14A and 15A, respectively. The controlling apparatus 6 controls the opening and closing of the valves 14A and 15A.

A device 37 that cleans the pH sensor included in the pH-meter 34 is disposed at the edge of the clarified water-feed piping 15. An example of the cleaning device 37 is a device that includes a plurality of cleaning nozzles through which the clarified water fed through the clarified water-feed piping 15 is ejected at a high pressure. The cleaning device 37 may optionally include an air nozzle through which air is ejected in order to clean the pH sensor with the clarified water and air bubbles.

The pH-meter 34 and the water gauge 35 are arranged in the retention section 32 of the measurement tank 3 at an adequate interval. The retention section 32 may have any volume sufficient to clean the pH-meter 34 with the cleaning device 37. The overflow section 33 may have a size sufficient to allow the overflowing water to discharge through the outlet 36 smoothly. For example, the storage capacity of the retention section 32 may be about 5 to 10 L. When the retention section 32 has such a small capacity, it is possible to force water stored in the retention section 32 to discharge from the retention section 32 in a short time and fill the retention section 32 with new circulating water by, for example, feeding circulating water through the circulating water-feed piping 14 at a high flow rate of about 5 to 50 L/min and preferably about 10 to 20 L/min. The same applies to the case where clarified water, such as industrial water, is fed through the clarified water-feed piping 15.

The circulating water contained in the circulating water pit 2 is drawn through piping 17 and, after a polymer coagulant has been added to the circulating water through piping 18, subjected to a coagulative separation treatment in the sludge-recovering apparatus 4. The coagulative separation water produced in the sludge-recovering apparatus 4 is returned to the circulating water pit 2 through piping 19. The resulting coagulated sludge is fed to the recovered sludge-storage tank 5 through piping 20.

In the system for treating water circulating through a wet paint booth, the feeding of the circulating water to the measurement tank 3 through the circulating water-feed piping 14 and the feeding of the clarified water, such as industrial water, to the measurement tank 3 through the clarified water-feed piping 15 are alternately done by controlling the on-off valves 14A and 15A in response to the signal sent from the controlling apparatus 6. A step in which the pH of the circulating water is measured and adjusted and a step in which the pH-meter is cleaned and the system is put on standby are alternately repeated in the following manner.

### <pH-Measurement and pH-Adjustment Step>

Upon the on-off valve 14A being opened (the on-off valve 15A is closed) in response to the signal sent from the controlling apparatus 6, the circulating water is fed into the measurement tank 3 through the circulating water-feed piping 14. Since the retention section 32 of the measurement tank 3 has a small capacity, feeding the circulating water to the measurement tank 3 through the circulating water-feed piping 14 at a high flow rate enables water contained in the retention section 32 to be replaced with the circulating water in a short time and the retention section 32 to be filled with the circulating water. The water forced to discharge from the retention section 32 is returned to the circulating water pit 2 through the overflow wall 31, the overflow section 33, the outlet 36, and the piping 16.

Upon the retention section 32 being filled with the circulating water as a result of the feeding of the circulating water and the water gauge 35 detecting an increase in the level of the circulating water, a detection signal is sent to the controlling apparatus 6. Upon receiving the signal, the controlling apparatus 6 sends a measurement signal to the pH-meter 34, and the pH-meter 34 measures the pH of the circulating water. The amount of time from the start of the feeding of the circulating water to the start of the measurement by the pH-meter 34 is normally about 1 to 5 minutes.

The controlling apparatus 6 receives the pH value measured by the pH-meter 34. The controlling apparatus 6 sends a chemical-feed signal to the device 21 for the addition of the alkaline solution of a phenolic resin or the device 22 for the addition of the acidic aluminum salt in accordance with the received pH value in order to adjust the pH of the circulating water. When the measured pH value is lower than the predetermined value, the chemical-feed signal is sent to the device 21 for the addition of the alkaline solution of a phenolic resin. When the measured pH value is higher than the predetermined value, the chemical-feed signal is sent to the device 22 for the addition of the acidic aluminum salt.

The pH-meter 34 may measure the pH of the circulating water continuously or intermittently.

The amount of time required by the pH-measurement and pH-adjustment step is not limited. However, if the amount of time required by the pH-measurement and pH-adjustment step is excessively small, it may not be possible to adequately adjust the pH of the circulating water. If the amount of time required by the pH-measurement and pH-adjustment step is excessively large, the pH-meter 34 may be contaminated, which reduces the accuracy of the measurement of pH. The amount of time required by each pH-measurement and pH-adjustment step, which includes the amount of time elapsed from the start of the feeding of the circulating water to the start of the measurement by the pH-meter 34, is preferably about 5 to 60 minutes and preferably about 10 to 30 minutes.

In order to prevent excessive amounts of alkaline solution of a phenolic resin and acidic aluminum salt from being added to the circulating water as a result of a malfunction of the pH-meter 34, it is preferable to set the maximum operation time of the chemical-feed pumps of the device 21 for the addition of the alkaline solution of a phenolic resin and the device 22 for the addition of the acidic aluminum salt in the controlling apparatus 6 and control the devices 21 and 22 with a timer such that the above chemicals are not added beyond the maximum operation time.

### <pH-Meter-Cleaning and Standby Step>

Subsequent to the pH-measurement and pH-adjustment step, the on-off valve 14A is closed and the on-off valve 15A is opened in response to the signal sent from the controlling apparatus 6 in order to stop the feeding of the circulating water and feed clarified water, such as industrial water, to the measurement tank 3 through the clarified water-feed piping 15. The clarified water fed through the clarified water-feed piping 15 is ejected through the jet nozzles of the cleaning device 37 toward the pH sensor of the pH-meter 34 in order to clean the pH sensor.

When the clarified water is fed into the measurement tank 3 for cleaning the pH-meter, since the retention section 32 has a small capacity, feeding the clarified water to the measurement tank 3 at a high flow rate of about 5 to 50 L/min and preferably about 10 to 20 L/min enables the circulating water contained in the retention section 32 to be replaced with clarified water in a relatively short time and the retention section 32 to be filled with the clarified water. The circulating water forced to discharge from the retention section 32 is fed to the circulating water pit 2 through the overflow wall 31, the overflow section 33, the outlet 36, and the piping 16.

After the retention section 32 has been filled with the clarified water as a result of the feeding of the clarified water, the on-off valve 15A is closed in order to stop the feeding of the clarified water and the following measurement-standby step is conducted.

The amount of time required for cleaning the pH sensor of the pH-meter 34 by the feeding of the clarified water is normally about 1 to 5 minutes.

Subsequent to the feeding of the clarified water and the cleaning of the pH-meter 34, the system is put on standby for a predetermined amount of time while the retention section 32 is filled with the clarified water. Conducting this standby step reduces a time lag that occurs when the pH of the circulating water is measured in the next pH-measurement and pH-adjustment step.

Since the circulating water pit has a large capacity, the alkaline solution of a phenolic resin or the acidic aluminum salt that is added to the circulating water pit 2 from the device 21 for the addition of the alkaline solution of a phenolic resin or the device 22 for the addition of the acidic aluminum salt, respectively, for adjusting the pH of the circulating water may fail to be diffused immediately over the entirety of the pit 2. That is, the pH of the circulating water is not always uniform in the pit. It is also considered that an alkaline or acidic component of the chemical added to the circulating water may gradually elute from the sludge deposited in the circulating water pit 2 and cause the pH of the circulating water to fluctuate locally in the circulating water pit 2.

If the standby step is omitted and the next pH-measurement and pH-adjustment step is conducted immediately after the pH-meter 34 has been cleaned with clarified water, the above-described nonuniformity and fluctuations in the pH of the circulating water in the circulating water pit 2 may affect the measured pH value. That is, it is not possible to measure the correct pH value.

Conducting the above-described standby step allows the circulating water contained in the circulating water pit 2 to be circulated by the circulation pump P through the circulation piping 12 during the standby step. This makes the properties of the circulating water contained in the circulating water pit 2 to be uniform. As a result, the nonuniformity and local fluctuations in the pH of the circulating water are reduced, and the pH value measured in the next pH-measurement and pH-adjustment step sufficiently reflects the pH of the circulating water contained in the system. Thus, the pH of the circulating water can be adjusted adequately in accordance with the measured pH value.

If the amount of time required by the standby step is excessively small, the above-described advantageous effects of conducting the standby step may fail to be achieved at a sufficient degree. If the amount of time required by the standby step is excessively large, the amount of time required by the pH-measurement and pH-adjustment step disadvantageously becomes relatively small. The amount of time required by the standby step, which is conducted subsequent to the steps of cleaning the pH-meter, is preferably about 10 to 50 minutes and particularly preferably about 20 to 30 minutes.

Subsequent to the standby step, the above-described pH-measurement and pH-adjustment step is conducted. In this manner, the pH-measurement and pH-adjustment step and the pH-meter-cleaning and standby step are alternately repeated.

Fig. 1 illustrates an example of the system for treating water circulating through a wet paint booth used in the present invention. However, the system for treating water circulating through a wet paint booth is not limited to that illustrated in Fig. 1.

Although an alkaline solution of a phenolic resin and an acidic aluminum salt are used as pH-adjusting agents for adjusting pH in Fig. 1, the alkaline solution of a phenolic resin may be replaced with a general-purpose alkaline agent, and the acidic aluminum salt may be replaced with a general-purpose acidic agent. The positions at which the above-described chemicals are added to the circulating water are not limited. A cationic polymer may optionally added to the circulating water.

### EXAMPLES

The present invention is described more specifically with reference to Examples.

### [Chemicals Used]

The following treatment chemicals were used.

Alkaline solution of a phenolic resin: "Kuristuck B-310" produced by Kurita Water Industries Ltd. (aqueous NaOH solution of a phenolic resin (novolac phenolformaldehyde polycondensate), phenolic resin concentration: 32 weight%, NaOH concentration: 5 weight%, pH: 12)

### (hereinafter, referred to as "B-310")

Acidic aluminum salt: aqueous aluminum sulfate solution (Al₂(SO₄)₃ concentration: 27 weight%) (hereinafter, referred to as "Al₂(SO₄)₃")
Acid: 10-weight% aqueous sulfuric acid solution (hereinafter, referred to as "sulfuric acid")
Cationic polymer: "Kuristuck B-450" produced by Kurita Water Industries Ltd. (alkylamine-epichlorohydrin condensate, weight-average molecular weight: 100 thousand) (hereinafter, referred to as "B-450")
Hereinafter, the term "stock solution" of a treatment chemical refers to the above solution (aqueous solution) of the chemical.

### [Example 1]

Water circulating through a wet paint booth was treated under the following conditions with the system for treating water circulating through a wet paint booth as illustrated in Fig. 1.

A paint included in the water circulating through a wet paint booth was collected under the following conditions.
Amount of paint (for automotive body, water-based) fed: 4 g/min
Circulating water: mixture of water circulating in an automobile assembly plant and tap water
Amount of water stored in circulating water pit 2: 800 L
Amount of circulating water (flow rate of water circulated through piping 11): 100 L/min
Predetermined amount of Al₂(SO₄)₃ added through piping 14': 0.12 g/min (in terms of the amount of stock solution) Predetermined amount of B-310 added through piping 13: 0.16 g/min (in terms of the amount of stock solution)
The conditions of the measurement tank 3 were as follows.

Hereinafter, the chemical-feed pump included in the device 21 for the addition of the alkaline solution of a phenolic resin is referred to as "B-310 pump", and the chemical-feed pump included in the device 22 for the addition of the acidic aluminum salt is referred to as "Al₂ (SO₄)₃ pump".

Volume of retention section 32 of measurement tank 3: 5 L
Flow rate at which industrial water was fed to measurement tank 3: 10 L/min
Amount of time during which industrial water was fed to measurement tank 3 (amount of time during which pH-meter was cleaned): 2 minutes
Amount of standby time: 28 minutes
Flow rate at which circulating water was fed to measurement tank 3: 10 L/min
Amount of time during which circulating water was fed to the measurement tank 3: 30 minutes
Amount of time elapsed from the start of feeding of circulating water to the measurement of pH: 2 minutes
Predetermined pH value: 6.8 to 7.2
Chemical-feed control conditions: The B-310 pump was turned on upon the pH of the circulating water falling below 6.8 and turned off upon the pH of the circulating water reaching 7.0. The Al₂(SO₄)₃ pump was turned on upon the pH of the circulating water exceeding 7.2 and turned off upon the pH of the circulating water reaching 7.0.
Flow rate of B-310 pump: 0.1 g/min (in terms of the amount of stock solution)
Flow rate of Al₂(SO₄)₃ pump: 0.1 g/min (in terms of the amount of stock solution)
Maximum operating time of B-310 pump: 100 minutes
Maximum operating time of Al₂(SO₄)₃ pump: 100 minutes
The circulating water was fed to the measurement tank 3. After a lapse of two minutes from the time when the feeding of the circulating water was started, the pH of the circulating water was measured with the pH-meter 34 and adjusted. The amount of time required by the pH measurement and pH adjustment was 28 minutes. Thus, the amount of time during which the circulating water was fed to the measurement tank 3 was 30 minutes in total.

In the pH-measurement and pH-adjustment step, B-310 or Al₂(SO₄)₃ was added to the circulating water as needed in accordance with the chemical-feed control conditions described above.

Subsequent to the pH-measurement and pH-adjustment step, industrial water was fed to the measurement tank 3 for two minutes in order to clean the pH-meter 34. The system was subsequently put on standby for 28 minutes while the measurement tank 3 was filled with the industrial water. Subsequent to the pH-meter-cleaning and standby step, the pH-measurement and pH-adjustment step was again conducted. In this manner, the pH-measurement and pH-adjustment step and the pH-meter-cleaning and standby step were alternately repeated.

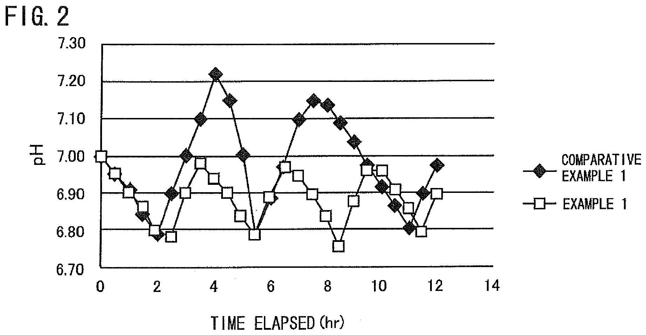

Table 1 and Fig. 2 show a change in the pH of the circulating water measured with the pH-meter 34 with time.

Table 2 summarizes the amounts of B-310 and Al₂(SO₄)₃ (amounts of chemicals fed with the B-310 pump and the Al₂(SO₄)₃ pump, respectively) required for adjusting pH in a 12-hour operation.

### [Comparative Example 1]

The system was operated as in Example 1, except that industrial water was not fed to the measurement tank 3, and the pH of the circulating water was measured and adjusted while the circulating water was continuously fed to the measurement tank 3 at a flow rate of 10 L/min. Table 1 and Fig. 2 show a change in the pH of the circulating water with time. Table 2 summarizes the amounts of B-310 and Al₂(SO₄)₃ required for adjusting pH.

**[Table 1]**

| Time elapsed (hr) | Measured pH value | |
|---|---|---|
| | Example 1 | Comparative example 1 |
| 0.0 | 6.99 | 7.00 |
| 0.5 | 6.95 | 6.95 |
| 1.0 | 6.90 | 6.91 |
| 1.5 | 6.86 | 6.84 |
| 2.0 | 6.80 | 6.79 |
| 2.5 | 6.78 | 6.90 |
| 3.0 | 6.90 | 7.00 |
| 3.5 | 6.98 | 7.10 |
| 4.0 | 6.94 | 7.22 |
| 4.5 | 6.90 | 7.15 |
| 5.0 | 6.84 | 7.00 |
| 5.5 | 6.79 | 6.80 |
| 6.0 | 6.89 | 6.88 |
| 6.5 | 6.97 | 6.98 |
| 7.0 | 6.95 | 7.10 |
| 7.5 | 6.90 | 7.15 |
| 8.0 | 6.84 | 7.14 |
| 8.5 | 6.76 | 7.09 |
| 9.0 | 6.88 | 7.04 |
| 9.5 | 6.96 | 6.98 |
| 10.0 | 6.96 | 6.92 |
| 10.5 | 6.91 | 6.87 |
| 11.0 | 6.86 | 6.81 |
| 11.5 | 6.80 | 6.90 |
| 12.0 | 6.90 | 6.98 |

**[Table 2]**

| | Amount of chemical used(g/12hr) | |
|---|---|---|
| | B-310 | Al₂(SO₄)₃ |
| Example 1 | 12 | 0 |
| Comparative example 1 | 18 | 5.5 |

The results shown in Tables 1 and 2 confirm that, according to the present invention, the pH of the circulating water can be adjusted with consistency and certainty while reducing fluctuations in the pH of the circulating water and the amounts of chemicals used.

In Example 1 and Comparative Example 1, the pH of a pH standard solution (pH: 6.81) was measured with the pH-meter 34 prior to and subsequent to the 12-hour operation. Table 3 summarizes the results. It was confirmed that, while the accuracy of the pH-meter was reduced due to the contamination of the pH-meter in Comparative Example 1, the accuracy of the pH-meter was maintained at a sufficient level in Example 1 since the pH-meter had been cleaned.

**[Table 3]**

| | Before operation | After operation |
|---|---|---|
| Example 1 | 6.81 | 6.81 |
| Comparative example 1 | 6.81 | 6.85 |

### [Example 2]

The treatment was performed as in Example 1, except that the chemical-feed control conditions were changed as follows. As a result, the pH of the circulating water was able to be adjusted with consistency and certainty as in Example 1.

Chemical-feed control conditions: The B-310 pump was turned on upon the pH of the circulating water falling below 6.9 and turned off upon the pH of the circulating water reaching 7.0. The Al₂(SO₄)₃ pump was turned on upon the pH of the circulating water exceeding 7.1 and turned off upon the pH of the circulating water reaching 7.0.

### [Examples 3 and 4 and Comparative Examples 2 to 4]

Into a bottle having a volume of 500 ml, 300 mL of tap water and 0.6 mL of a water-based paint (water-based paint for automotive bodies: silver metallic (acryl-based)) were charged. The chemicals shown in Table 4 were further added to the bottle in the specific amounts shown in Table 4 (note that, any chemical was not used in Comparative Example 2). Subsequently, a cap was put on the bottle. The bottle was then shaken 60 times every 30 seconds. The entirety of the contents of the bottle was transferred into a beaker, and the pH and the colloid equivalent (determined with a PCD (particle charge detector) produced by Mütek) of the treatment liquid were measured. Subsequently, the following foaming test, turbidity measurement, and secondary coagulation test were conducted.

"Amounts of chemicals added" in Table 4 are each determined in terms of the amount of the product (stock solution). The same applies to Tables 5 to 7.

### <Foaming Test>

Into a 1-liter graduated cylinder, 300 mL of the treatment liquid was charged. A bubbling test of the treatment liquid was conducted.

In the bubbling test, air was blown into the treatment liquid contained in the graduated cylinder at a rate of 1.5 L/min with a spherical air stone in order to bubble the treatment liquid. Thus, the foaming ability and defoaming ability of the treatment liquid were determined as described below.

### <Foaming Ability>

The amount (mL) of bubbles was measured after a lapse of two minutes from the time when the bubbling was started.

When the amount of bubbles exceeded 700 mL within 2 minutes, the number of seconds required for the amount of bubbles to exceed 700 mL was measured. The larger the number of seconds required for the amount of bubbles to exceed 700 mL, the greater the anti-foaming effect.

### <Defoaming Ability>

Subsequent to performing bubbling, the treatment liquid was left to stand for two minutes, and the amount (mL) of the remaining bubbles was measured.

In the case where the bubbles disappeared within two minutes, the number of seconds required for the bubbles to disappear was measured. The smaller the number of seconds required for the bubbles to disappear, the higher the defoaming ability of the treatment liquid.

### <Turbidity Measurement>

The treatment liquid was filtered through a Whatman filter paper No. 41 (particle retention: 20 to 25 microns). The turbidity of the filtrate was measured with a turbidimeter.

### <Secondary Coagulation Test>

To the treatment liquid, 1 mL (13 mg/L in terms of the concentration of active constituents) of 1-weight% solution of a cationic polymer coagulant (copolymer of acrylamide and 2-(acryloyloxy)ethyltrimethylammonium chloride (weight-average molecular weight: 8 million)) was added. The state of flocs was determined and evaluated in accordance with the following criteria.

### <Coagulation Effect>

Good: Suitable flocs were formed, that is, the treatment liquid had a good coagulation property.

Poor: Flocs were not formed, that is, the coagulation effect was not obtained.

Table 4 summarizes the results.

In a coagulation treatment of a water-based paint, the achievement of the primary coagulation of the paint (i.e., low turbidity of the filtrate) and the anti-foaming property are the most important evaluation items.

**[Table 4]**

| | Amount of chemical added (% relative to weight of paint) | | | | pH | Colloid equivalent (meq/L) | Anti-foaming effect | | Defoaming ability | | Turbidity of filtrate (degree) | Secondary coagulation property |
|---|---|---|---|---|---|---|---|---|---|---|---|---|
| | B-310 | Al₂(SO₄)₃ | Sulfuric acid | B-450 | | | Amount of bubbles after 2 minutes (mL) | Amount of bubbles reached 700 mL (sec) | Amount of bubbles after 2 minutes (mL) | Amount of bubbles reached 0 mL (sec) | | |
| Comparative example 2 | - | - | - | - | 7.4 | -0.1 | 700 or more | 55 | 200 | 120 or more | 100 or more | Poor |
| Comparative example 3 | 4 | - | 5.8 | 2.2 | 6.97 | 0.03 | 300 | - | 0 | 34 | 1.0 | Good |
| Example 3 | 2 | 2 | - | 0.5 | 6.97 | 0.015 | 350 | - | 0 | 29 | 0.5 | Good |
| Example 4 | 4 | 2 | - | 2.0 | 7.99 | -0.005 | 350 | - | 0 | 30 | 0.5 | Good |
| Comparative example 4 | 6 | - | - | 2.5 | 8.04 | -0.005 | 350 | - | 0 | 32 | 1.0 | Good |

In the treatment of a water-based paint, the colloid equivalent of the treatment water significantly affects the treatment effect. Thus, the colloid equivalent of water treated in each test was controlled to be substantially equal.

The results shown in Table 4 confirm that the turbidity of the filtrate was low, that is, the treatment liquid was clear, in Examples 3 and 4, where aluminum sulfate was used. In the foaming test, a large amount of bubbles were generated in Comparative Example 2, where no treatment was performed, while the amounts of bubbles generated in Examples 3 and 4 and Comparative Examples 3 and 4 were substantially equal to one another.

The above results confirm that adjusting the pH of the treatment liquid to about 7 reduced the amounts of chemicals required and that using aluminum sulfate in combination reduced the turbidity of the filtrate without using a hazardous substance such as sulfuric acid.

### [Example 5 and Comparative Examples 5 to 8]

A coagulation treatment was performed as in Example 3, except that an intercoating paint (for automotive-body coating: gray (polyester-based)) was used instead of a water-based paint, and the amounts of chemicals were set as shown in Table 5 (any chemical was not used in Comparative Example 5). Subsequently, the evaluation tests were conducted as in Example 3. Table 5 summarizes the results.

**[Table 5]**

| | Amount of chemical added (% relative to weight of paint) | | | | pH | Colloid equivalent (meq/L) | Anti-foaming effect | | Defoaming ability | | Turbidity of filtrate (degree) | Secondary coagulation property |
|---|---|---|---|---|---|---|---|---|---|---|---|---|
| | B-310 | Al₂(SO₄)₃ | Sulfuric acid | B-450 | | | Amount of bubbles after 2 minutes (mL) | Amount of bubbles reached 700 mL (sec) | Amount of bubbles after 2 minutes (mL) | Amount of bubbles reached 0 mL (sec) | | |
| Comparative example 5 | - | - | - | - | 7.2 | -0.11 | 700 or more | 50 | 100 | 300 | 100 or more | Poor |
| Comparative example 6 | 6 | - | 6.5 | 2.2 | 6.55 | 0.03 | 300 | - | 0 | 50 | 1.5 | Good |
| Example 5 | 4 | 3.5 | - | - | 6.54 | -0.005 | 300 | - | 0 | 55 | 0.5 | Good |
| Comparative example 7 | 6 | 3.0 | - | 20 | 8.1 | -0.01 | 350 | - | 0 | 60 | 0.5 | Good |
| Comparative example 8 | 10 | - | - | 3.0 | 8.3 | -0.01 | 300 | - | 0 | 65 | 2.0 | Good |

The results shown in Table 5 confirm that, in the treatment of the intercoating paint, the turbidity of the filtrate was low, that is, the treatment liquid was clear, in Example 5 and Comparative Example 7, where aluminum sulfate was used. In the foaming test, a large amount of bubbles were generated in Comparative Example 5, where no treatment was performed, while the amounts of bubbles generated in Example 5 and Comparative Examples 6 to 8 were substantially equal to one another. Adjusting the pH of the treatment liquid to about 7 reduced the amounts of chemicals required. In the treatment of the intercoating paint, the treatment was performed in a suitable manner even without using B-450 (cationic polymer) as in Example 5. Using aluminum sulfate in combination reduced the turbidity of the filtrate without using a hazardous substance such as sulfuric acid.

### [Example 6 and Comparative Examples 9 to 12]

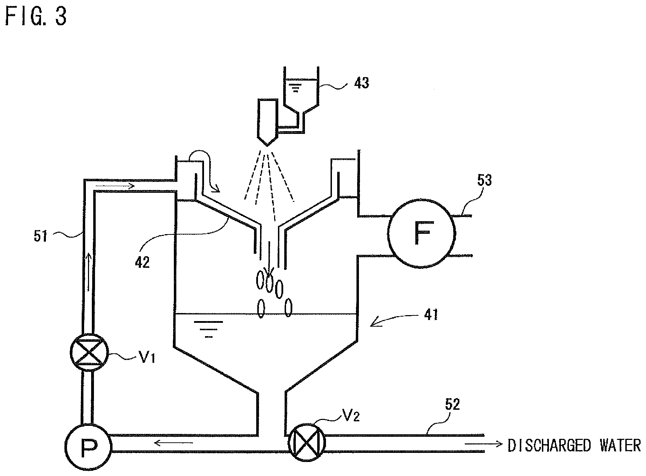

A test was conducted using the test system illustrated in Fig. 3. In the test system, circulating water contained in a circulating water tank 41 having a capacity of 50 L was caused, by a pump P, to circulate and flow downward along a water-screen plate 42 disposed above the circulating water tank, on which a paint was sprayed. In Fig. 3, Reference Numeral 43 denotes a paint-spraying apparatus, Reference Numeral 51 denotes circulation piping, Reference Numeral 52 denotes drainage piping through which the circulating water was discharged to the outside, Reference Numeral 53 denotes exhaust piping, V₁ and V₂ denote a valve, and F denotes an exhaust fan.

With 50 L of tap water, 100 mL of a water-based paint (for automotive-body coating: silver metallic (acryl-base)) was mixed. To the mixture, the chemicals shown in Table 6 were added in the amounts shown in Table 6 (note that, any chemical was not used in Comparative Example 9). Subsequently, the system was actuated. A solvent-based paint (automotive body clear solvent-based paint) was sprayed at a rate of 2 g/minute for 30 minutes. Then, the system was paused.

The adhesion of the treatment sludge that came to the water surface of the circulating water tank was inspected with fingers and evaluated in accordance with the following criteria.

### <Evaluation Criteria>

Good: Adhesion of the sludge was not confirmed
Poor: Adhesion of the sludge was confirmed

The measurement of the pH of the treatment liquid, the measurement of the amount of charge, the foaming test, the measurement of the turbidity of the filtrate, and the secondary coagulation test were conducted as in Example 3. In the secondary coagulation test, the amount of cationic polymer coagulant added was set to 13 mg/L in terms of the concentration of active components.

Table 6 summarizes the results.

The most important evaluation item in the treatment of a solvent-based paint is whether the adhesion of the treatment sludge was confirmed or not. The most important evaluation items in the treatment of a water-based paint are whether the primary coagulation of the paint was achieved or not (whether the turbidity of the filtrate is low or not) and whether the treatment liquid had an anti-foaming property or not.

**[Table 6]**

| | Amount of chemical added (% relative to weight of paint) 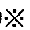 | | | | pH | Colloid equivalent (meq/L) | Adhesion | Anti-foaming effect | | Defoaming ability | | Turbidity of filtrate (degree) | Secondary coagulation property |
|---|---|---|---|---|---|---|---|---|---|---|---|---|---|
| | B-310 | Al₂(SO₄)₃ | Sulfuric acid | B-450 | | | | Amount of bubbles after 2 minutes (mL) | Amount of bubbles reached 700 mL (sec) | Amount of bubbles after 2 minutes (mL) | Amount of bubbles reached 0 mL (sec) | | |
| Comparative example 9 | - | - | - | - | 7.3 | -0.11 | × | 700 or more | 70 | 150 | 120 or more | 100 or more | Poor |
| Comparative example 10 | 3 | - | 1.5 | 0.3 | 6.90 | 0.00 | ○ | 300 | - | 0 | 28 | 1.0 | Good |
| | 4 | - | 5.5 | 2.5 | | | | | | | | | |
| Example 6 | 3 | 0.7 | - | 0.3 | 7.05 | -0.005 | ○ | 300 | - | 0 | 28 | 0.5 | Good |
| | 2 | 2 | - | 0.5 | | | | | | | | | |
| Comparative example 11 | 3 | 0.3 | - | 0.3 | 8.25 | -0.005 | ○ | 330 | - | 0 | 29 | 0.5 | Good |
| | 4 | 2 | | 3.0 | | | | | | | | | |
| Comparative example 12 | 3 | - | - | 0.3 | 8.40 | -0.005 | ○ | 320 | - | 0 | 29 | 1.0 | Good |
| | 6 | | | 3.2 | | | | | | | | | |

| | | | | | | | | | | | | | |
|---|---|---|---|---|---|---|---|---|---|---|---|---|---|
| 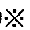 The proportion of the amount of chemical relative to the amount of solvent-based paint is in the upper row. The proportion of the amount of chemical relative to the amount of water-based paint is in the lower row. | | | | | | | | | | | | | |

The results shown in Table 6 confirm that the turbidity of the filtrate was low in Example 6 and Comparative Example 11, where aluminum sulfate was used. That is, the treatment liquid was clear in Example 6 and Comparative Example 11. In the foaming test, a large amount of bubbles were generated in Comparative Example 9, where no treatment was performed, while the amounts of bubbles generated in Example 6 and Comparative Examples 10 to 12 were substantially equal to one another. A reduction in the adhesion of a solvent-based paint was achieved at substantially the same level in each of Example 6 and Comparative Examples 10 to 12.

The above results confirm that adjusting the pH of the treatment liquid to the optimum pH by using aluminum sulfate in combination further reduced the amounts of chemicals required.

### [Examples 7 and 8 and Comparative Examples 13 to 15]

A coagulation treatment was performed as in Example 6, except that a mixture (1:1) of a water-based paint (for automotive-body coating: white (acryl-based)) and a water-based, intercoating paint (for automotive-body coating: white (polyester-based)) was used instead of the water-based paint, and the amounts of chemicals added were set as shown in Table 7 (note that, any chemical was not used in Comparative Example 13). Subsequently, evaluations were made as in Example 6.

Table 7 summarizes the results.

**[Table 7]**

| | Amount of chemical added (% relative to weight of paint) 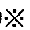 | | | | pH | Colloid equivalent (meq/L) | Adhesion | Anti-foaming effect | | Defoaming ability | | Turbidity of filtrate (degree) | Secondary coagulation property |
|---|---|---|---|---|---|---|---|---|---|---|---|---|---|
| | B-310 | Al₂(SO₄)₃ | Sulfuric acid | B-450 | | | | Amount of bubbles after 2 minutes (mL) | Amount of bubbles reached 700 mL (sec) | Amount of bubbles after 2 minutes (mL) | Amount of bubbles reached 0 mL (sec) | | |
| Comparative example 13 | - | - | - | - | 7.2 | -0.15 | × | 700 or more | 80 | 130 | 120 or more | 100 or more | Poor |
| Comparative example 14 | 3 | - | 1.5 | 0.3 | 7.00 | 0.005 | ○ | 350 | - | 0 | 45 | 1.5 | Good |
| | 5 | - | 5.0 | 2.5 | | | | | | | | | |
| Example 7 | 3 | 0.7 | - | - | 6.70 | -0.005 | ○ | 300 | - | 0 | 40 | 0.5 | Good |
| | 4 | 3.5 | - | - | | | | | | | | | |
| Example 8 | 3 | 0.3 | - | 0.3 | 8.00 | -0.01 | ○ | 330 | - | 0 | 55 | 0.5 | Good |
| | 5 | 2.5 | | 2.5 | | | | | | | | | |
| Comparative example 15 | 3 | - | - | 0.3 | 8.40 | -0.005 | ○ | 320 | - | 0 | 55 | 3.0 | Good |
| | 8 | | | 3.0 | | | | | | | | | |

| | | | | | | | | | | | | | |
|---|---|---|---|---|---|---|---|---|---|---|---|---|---|
| 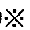 The proportion of the amount of chemical relative to the amount of solvent-based paint is in the upper row. The proportion of the amount of chemical relative to the amount of water-based paint is in the lower row. | | | | | | | | | | | | | |

The results shown in Table 7 confirm that the turbidity of the filtrate was low in Examples 7 and 8, where aluminum sulfate was used. That is, the treatment liquid was clear in Examples 7 and 8. In the foaming test, a large amount of bubbles were generated in Comparative Example 13, where no treatment was performed, while the amounts of bubbles generated in Examples 7 and 8 and Comparative Examples 14 and 15 were substantially equal to one another. In addition, a reduction in the adhesion of a solvent-based paint was achieved at substantially the same level in each of Examples 7 and 8 and Comparative Examples 14 and 15.

The above results confirm that adjusting the pH of the treatment liquid to the optimum pH by using aluminum sulfate in combination further reduced the amounts of chemicals required.

### Reference Signs List

1 WET PAINT BOOTH
2 CIRCULATING WATER PIT
3 MEASUREMENT TANK
4 SLUDGE-RECOVERING APPARATUS
5 RECOVERED SLUDGE-STORAGE TANK
6 CONTROLLING APPARATUS
21 DEVICE FOR THE ADDITION OF THE ALKALINE SOLUTION OF A PHENOLIC RESIN
22 DEVICE FOR THE ADDITION OF THE ACIDIC ALUMINUM SALT
31 OVERFLOW WALL
32 RETENTION SECTION
33 OVERFLOW SECTION
34 pH-METER
35 WATER GAUGE
41 CIRCULATING WATER TANK
42 WATER-SCREEN PLATE
43 PAINT-SPRAYING APPARATUS

## Claims

1. A method for treating circulating water circulating through a wet paint booth and including a paint,
the method comprising treating a paint included in the circulating water by separately adding an alkaline solution of a phenolic resin and an acidic aluminum salt to the circulating water for adjusting a pH of the circulating water to 6.5 to 8.0,
wherein an amount of the alkaline solution of the phenolic resin added to the circulating water is increased when the pH of the circulating water is a predetermined value of 8.0 or less;
wherein an amount of the acidic aluminum salt added to the circulating water is increased when the pH of the circulating water is a predetermined value of 6.5 or more, and
wherein any alkaline agent other than the alkaline solution of a phenolic resin is not used and any acidic agent other than the acidic aluminum salt is not used.

2. The method for treating circulating water circulating through a wet paint booth according to Claim 1,
wherein an amount of the alkaline solution of the phenolic resin added to the circulating water is increased when the pH of the circulating water is less than 6.8, and
wherein an amount of the acidic aluminum salt added to the circulating water is increased when the pH of the circulating water is more than 7.2.

3. The method for treating circulating water circulating through a wet paint booth according to any one of Claims 1 to 2, wherein the acidic aluminum salt is at least one selected from the group consisting of aluminum sulfate, aluminum chloride, polyaluminum chloride, basic aluminum chloride, and aluminum nitrate.

4. The method for treating circulating water circulating through a wet paint booth according to any one of Claims 1 to 3, wherein a cationic polymer is further added to the circulating water.

5. The method for treating circulating water circulating through a wet paint booth according to any one of Claims 1 to 4, wherein a polymer coagulant is further added to the circulating water in order to perform a coagulation treatment, after the alkaline solution of the phenolic resin; the alkaline solution of a phenolic resin and the acidic aluminum salt; or the alkaline solution of a phenolic resin, the acidic aluminum salt, and the cationic polymer is added to the circulating water.

## Patentansprüche

1. Verfahren zur Behandlung von zirkulierendem Wasser, das durch eine nasse Farbanlage zirkuliert und eine Farbe enthält,
wobei das Verfahren das Behandeln einer Farbe, die in dem zirkulierenden Wasser enthalten ist, beinhaltet, indem separat eine alkalische Lösung eines phenolischen Harzes und eines sauren Aluminiumsalzes zu dem zirkulierenden Wasser gegeben wird, zum Einstellen eines pH des zirkulierenden Wassers auf 6,5 bis 8,0,
worin eine Menge der alkalischen Lösung aus dem phenolischen Harz, das zu dem zirkulierenden Wasser gegeben wird, erhöht wird, wenn der pH des zirkulierenden Wassers ein bestimmter Wert von 8,0 oder weniger ist,
worin eine Menge des sauren Aluminiumsalzes, das zum zirkulierenden Wasser gegeben ist, erhöht wird, wenn der pH des zirkulierenden Wassers ein bestimmter Wert von 6,5 oder mehr ist, und
worin irgendein anderes alkalisches Mittel als die alkalische Lösung aus einem phenolischen Harz nicht verwendet wird und irgendein anderes saures Mittel als das saure Aluminiumsalz nicht verwendet wird.

2. Verfahren zur Behandlung von zirkulierendem Wasser, das durch eine nasse Farbanlage zirkuliert, gemäß Anspruch 1,
worin eine Menge der alkalischen Lösung aus dem phenolischen Harz, das zum zirkulierenden Wasser gegeben wird, erhöht wird, wenn der pH des zirkulierenden Wassers weniger als 6,8 ist und
worin eine Menge des sauren Aluminiumsalzes, das zu dem zirkulierenden Wasser gegeben wird, erhöht wird, wenn der pH des zirkulierenden Wassers mehr als 7,2 ist.

3. Verfahren zur Behandlung von zirkulierendem Wasser, das durch eine nasse Farbanlage zirkuliert, gemäß einem der Ansprüche 1 bis 2, worin das saure Aluminiumsalz zumindest eines ist, ausgewählt aus der Gruppe, bestehend aus Aluminiumsulfat, Aluminiumchlorid, Polyaluminiumchlorid, basischem Aluminiumchlorid und Aluminiumnitrat.

4. Verfahren zur Behandlung von zirkulierendem Wasser, das durch eine nasse Farbanlage zirkuliert, gemäß einem der Ansprüche 1 bis 3, worin ein kationisches Polymer weiterhin zum zirkulierenden Wasser gegeben wird.

5. Verfahren zur Behandlung von zirkulierendem Wasser, das durch eine nasse Farbanlage zirkuliert, gemäß einem der Ansprüche 1 bis 4, worin ein polymeres Koagulans weiter zu dem zirkulierenden Wasser zum Durchführen einer Koagulationsbehandlung nach der alkalischen Lösung des phenolischen Harzes gegeben wird, die alkalische Lösung aus einem phenolischen Harz und dem sauren Aluminiumsalz oder die alkalische Lösung aus einem phenolischen Harz, dem sauren Aluminiumsalz und dem kationischen Polymer zu dem zirkulierenden Wasser gegeben wird.

## Revendications

1. Procédé de traitement d'eau en circulation circulant à travers une cabine de peinture humide et incluant une peinture,
le procédé comprenant le traitement d'une peinture incluse dans l'eau en circulation en ajoutant séparément une solution alcaline d'une résine phénolique et d'un sel d'aluminium acide à l'eau en circulation pour ajuster un pH de l'eau en circulation entre 6,5 et 8,0,
dans lequel une quantité de la solution alcaline de la résine phénolique ajoutée à l'eau en circulation est augmentée lorsque le pH de l'eau en circulation est une valeur prédéterminée de 8,0 ou moins ;
dans lequel une quantité du sel d'aluminium acide ajoutée à l'eau en circulation est accrue lorsque le pH de l'eau en circulation est une valeur prédéterminée de 6,5 ou plus, et
dans lequel tout agent alcalin autre que la solution alcaline d'une résine phénolique n'est pas utilisé et tout agent acide autre que le sel d'aluminium acide n'est pas utilisé.

2. Procédé de traitement d'eau en circulation circulant à travers une cabine de peinture humide selon la revendication 1,
dans lequel une quantité de la solution alcaline de la résine phénolique ajoutée à l'eau en circulation est accrue lorsque le pH de l'eau en circulation est inférieur à 6,8, et
dans lequel une quantité du sel d'aluminium acide ajoutée à l'eau en circulation est augmentée lorsque le pH de l'eau en circulation est supérieur à 7,2.

3. Procédé de traitement d'eau en circulation circulant à travers une cabine de peinture humide selon l'une quelconque des revendications 1 à 2, dans lequel le sel d'aluminium acide est au moins un choisi dans le groupe constitué de sulfate d'aluminium, de chlorure d'aluminium, de chlorure de polyaluminium, de chlorure d'aluminium basique et de nitrate d'aluminium.

4. Procédé de traitement d'eau en circulation circulant à travers une cabine de peinture humide selon l'une quelconque des revendications 1 à 3, dans lequel un polymère cationique est en outre ajouté à l'eau en circulation.

5. Procédé de traitement d'eau en circulation circulant à travers une cabine de peinture humide selon l'une quelconque des revendications 1 à 4, dans lequel un coagulant polymère est en outre ajouté à l'eau en circulation afin de réaliser un traitement de coagulation, une fois que la solution alcaline de la résine phénolique ; la solution alcaline d'une résine phénolique et du sel d'aluminium acide ou la solution alcaline d'une résine phénolique, du sel d'aluminium acide et du polymère cationique est ajoutée à l'eau en circulation.
